# EUROPEAN PATENT SPECIFICATION

(11) **EP 4 520 219 B1**
(45) Date of publication and mention of the grant of the patent: **29.04.2026**
(21) Application number: 23881104.6
(22) Date of filing: 29.03.2023
(51) Int. Cl.: A45D 33/24, A45D 33/00

(54) **REPLACEABLE POWDER COMPACT**
NACHFÜLLBARE PUDER-KOMPAKTDOSE
POUDRIER REMPLAÇABLE

(30) Priority: 09.12.2022 CN 202223299280 U
(43) Date of publication of application: 12.03.2025
(73) Proprietor: PPK (Shanghai) Packaging Co., Ltd., Shanghai 201101 (CN)
(72) Inventor: ZHOU, Helin, Shanghai 201101 (CN)
(74) Representative: Bayramoglu et al.
(86) International application number: PCT/CN2023/084594
(87) International publication number: WO 2024/087505

(56) References cited:
- EP-A1- 3 791 750
- CN-U- 212 165 181
- CN-U- 215 776 136
- JP-A- H0 810 042
- KR-A- 20180 086 316
- KR-B1- 102 282 719
- US-A- 4 421 127
- US-A- 4 421 127
- US-A1- 2021 169 198
- US-A1- 2021 259 386
- US-A1- 2021 259 386
- US-A1- 2022 031 046

## Description

### TECHNICAL FIELD

The present disclosure relates to the field of cosmetics, and in particular to a cosmetic container.

### BACKGROUND TECHNOLOGY

At present, after a powder compact and a powder palette are used up, the packaging material is discarded completely and cannot be reused. The brand-new packaging material is extremely wasted. Moreover, the packaging material is non-degradable. A large number of discarded packaging materials will seriously pollute the environment. US2021/169198A1 discloses a container for make-up products. The container includes a support to which at least one godet is coupled, which is configured to contain the make-up product, the support being hinged along an axis to a cover which, when in a closed position, is superimposed on the support; the godet is removably fixed to the support. US4421127A discloses compact case with interchangeable cosmetic inserts. The compact case includes a top cover, a bottom support tray, and an intermediate lid positioned between the top cover and support tray, all being hinged together for relative movement with respect to one another, the support tray including a matrix configuration of ribs defining areas to accept the cosmetic inserts while the lid defines openings corresponding to the matrix configuration. The cosmetic inserts contain cosmetic materials and are removably positioned in selected ones of the areas and include a base defining a perimetrical edge of proper dimension and geometric shape corresponding to the selected area and an upstanding neck member interiorly disposed relative the perimetrical edge to define a circumferential horizontal ledge. The openings in the lid register with the neck members and their associated ledges to restrain the cosmetic inserts in the compact case. US2021/259386A1 discloses an environmentally friendly replaceable paper powder container. EP3791750A1 discloses a paper container for cosmetic products. KR102282719B1 discloses a cosmetic case for foundation. US2022/031046A1 discloses a container for cosmetic product. The container includes at least one base part having at least one housing delimited to receive a cosmetic product. A cover is hinged about a first pivoting axis and the cover is kept closed on the base part by an actuator. An intermediate panel is rotatable with respect to the cover and the base part about a second pivot axis, when the container is open, between a closed usage position where the inner edge of the intermediate panel is lowered onto the base part around the cosmetic product to keep the product within the housing, and an inclined open position. The intermediate panel includes at least one hollow front portion forming a receptacle. The base part includes at least one opening that extends through the entire thickness thereof so as to receive, in the closed position of the intermediate panel, the hollow front portion.

### SUMMARY OF THE INVENTION

### Technical problem

A technical problem to be solved by the present disclosure is to provide a replaceable powder palette. According to the replaceable powder palette, after the material in the replaceable container is used up, the replaceable container can be discarded directly, without influences on the environment. Meanwhile, the small compartments on the base can be combined according to an actual demand to cooperate freely with various replaceable containers for use. Therefore, the present disclosure meets the demand on personalized customization, and has the extensive popularization and application values.

### Technical solutions

The present disclosure is realized as follows: A replaceable powder palette includes a dustproof cap, a flip cap, a replaceable container, and a base, where the dustproof cap covers the base; at least one use port is formed in the flip cap; the replaceable container is a top-opened case; the base is provided with an accommodating cavity; at least one small compartment is enclosed in the accommodating cavity through a retaining wall; the replaceable container is clamped on the retaining wall; the flip cap is hinged to the base and has a use position and an open position; the flip cap located at the use position presses the replaceable container, with the use port corresponding to an opening of the replaceable container; and when the flip cap is located at the open position, the replaceable container is in a dismountable state. A pair of fetching gaps are formed centrosymmetrically in the retaining wall. There are a plurality of small compartments; and the plurality of small compartments are arranged on the base in a matrix. Two adjacent ones of the plurality of small compartments are formed into one group; the retaining wall is divided by the pair of fetching gaps into two sections; fetching gaps in the retaining walls corresponding to two small compartments in a same group are respectively provided at same positions; and for the two small compartments in the same group, adjacent sections of the retaining walls are lower than sections of the retaining walls away from each other.

Preferably, the replaceable container is made of a degradable material.

Preferably, the base is a square case; the flip cap includes one side provided with a second hinge shaft, and the other side provided with a fastener; and a clamping groove matching the fastener is formed in the base.

Preferably, one side of the dustproof cap is hinged to the base through a first hinge shaft; and the first hinge shaft and the second hinge shaft are a same shaft.

Preferably, one side of the dustproof cap is hinged to the base through a first hinge shaft; and the first hinge shaft and the second hinge shaft are hinged to adjacent edges of the base.

Preferably, a corner position of a side of the flip cap not provided with the second hinge shaft is further provided with an open groove.

Preferably, an inner surface of the dustproof cap is further provided with a cosmetic mirror.

### Beneficial effects

According to the replaceable powder palette provided by the present disclosure, after the material in the replaceable container is used up, the replaceable container can be discarded directly, without influences on the environment. Meanwhile, the small compartments on the base can be combined according to an actual demand to cooperate freely with various replaceable containers for use. Therefore, the present disclosure meets the demand on personalized customization, and has the extensive popularization and application values.

### DESCRIPTION OF THE DRAWINGS

FIG. 1 is a schematic exploded view of parts of a replaceable powder palette according to the present disclosure;
FIG. 2 is a schematic sectional view according to the present disclosure;
FIG. 3 is a schematic structural view of a flip cap and a base according to the present disclosure;
FIG. 4 is a schematic perspective view when a flip cap is located at an open position according to Embodiment 1 of the present disclosure; and
FIG. 5 is a schematic perspective view when a flip cap is located at an open position according to Embodiment 2 of the present disclosure.

In the figures: 1: dustproof cap, 2: flip cap, 3: replaceable container, 4: base, 5: cosmetic mirror, 11: first hinge shaft, 21: use port, 22: second hinge shaft, 23: fastener, 24: open groove, 41: accommodating cavity, 42: retaining wall, 43: small compartment, 44: fetching gap, and 45: clamping groove.

### BEST IMPLEMENTATION OF THE PRESENT INVENTION

The present disclosure will be further described below with reference to specific embodiments. It should be understood that these embodiments are only intended to describe the present disclosure, rather than to limit the scope of the present disclosure. In addition, it is to be understood that various changes and modifications can be made to the present disclosure by those skilled in the art after reading the materials of the present disclosure, as long as these equivalent forms also fall within the scope defined by the appended claims of the present disclosure.

### Embodiments

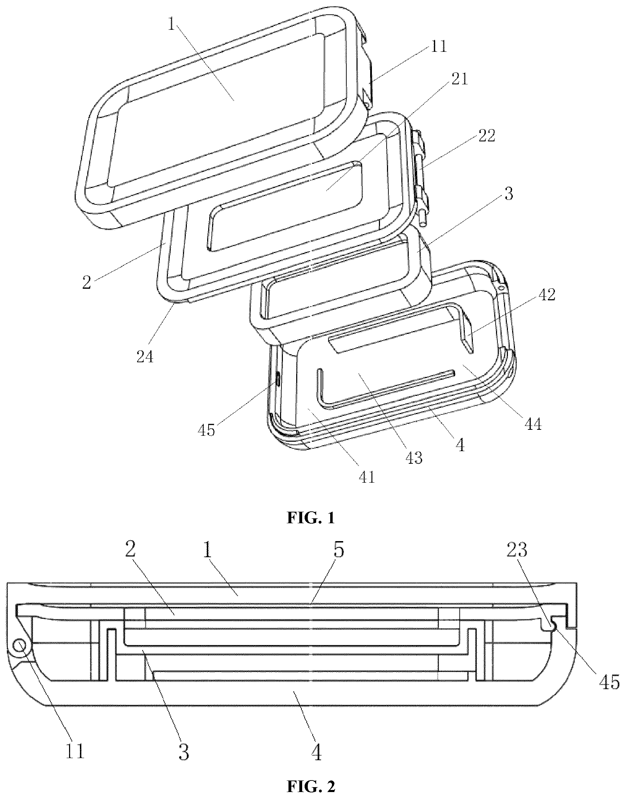

As shown in FIG. 1 and FIG. 2, a replaceable powder palette includes dustproof cap 1, flip cap 2, replaceable container 3, and base 4. The dustproof cap 1 covers the base 4. At least one use port 21 is formed in the flip cap 2. The replaceable container 3 is a top-opened case. The base 4 is provided with accommodating cavity 41. At least one small compartment 43 is enclosed in the accommodating cavity 41 through retaining wall 42. The replaceable container 3 is clamped on the retaining wall 42. The flip cap 2 is hinged to the base 4 and has a use position and an open position. The flip cap 2 located at the use position presses the replaceable container 3, with the use port 21 corresponding to an opening of the replaceable container 3. When the flip cap 2 is located at the open position, the replaceable container 3 is in a dismountable state.

In the present disclosure, in order to take out the replaceable container 3 conveniently for replacement, a pair of fetching gaps 44 are formed centrosymmetrically in the retaining wall 42.

Generally, in order to meet the actual use demand, there are a plurality of small compartments 43. The plurality of small compartments 43 are arranged on the base 4 in a matrix. In this way, replaceable containers 3 containing different components can be placed in the small compartments 43 respectively to meet the actual makeup demand.

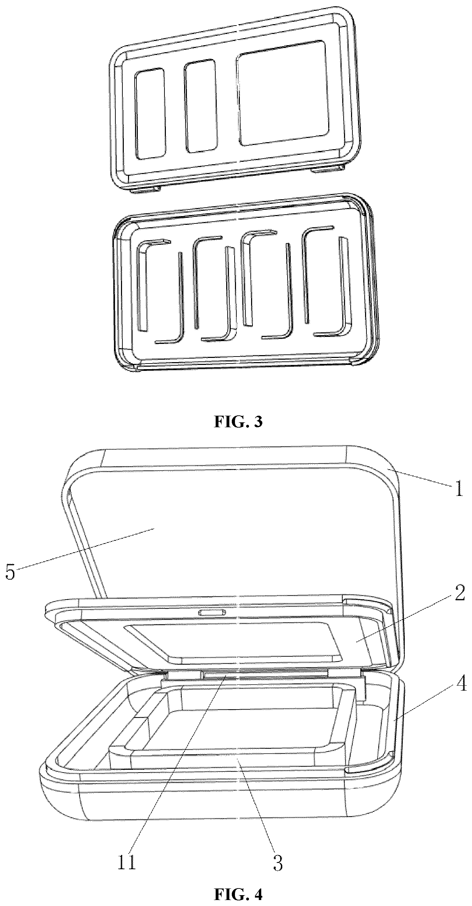

As shown in FIG. 3, in the present disclosure, in order to further meet the demand on personalized customization, two adjacent ones of the plurality of small compartments 43 are formed into one group. The retaining wall 42 is divided by the pair of fetching gaps 44 into two sections. Fetching gaps 44 in the retaining walls 42 corresponding to two small compartments 43 in a same group are respectively provided at same positions. For the two small compartments 43 in the same group, adjacent sections of the retaining walls 42 are lower than sections of the retaining walls 42 away from each other. In arrangement, the group of small compartments 43 may be combined into big replaceable container 3. After the two adjacent lower sections of the retaining walls each are assorted with the corresponding replaceable container, the placement and use of the big replaceable container are not affected.

In the present disclosure, the replaceable container 3 is made of a degradable material. The replaceable container 3 can be discarded directly, without influences on the environment. Generally, the degradable material is a paper material prepared from wood fibers, bamboo fibers, chitin fibers or polylactic acid fibers. The replaceable container 3 is formed integrally with a paper-making process, thereby reducing the production cost.

Further, the base 4 is a square case. The flip cap 2 includes one side provided with second hinge shaft 22, and the other side provided with fastener 23. Clamping groove 45 matching the fastener 23 is formed in the base 4.

As shown in FIG. 4, in Embodiment 1, one side of the dustproof cap 1 is hinged to the base 4 through first hinge shaft 11. The first hinge shaft 11 and the second hinge shaft 22 are a same shaft. This achieves the simple structure, reduces the production cost, and simplifies the assembly process.

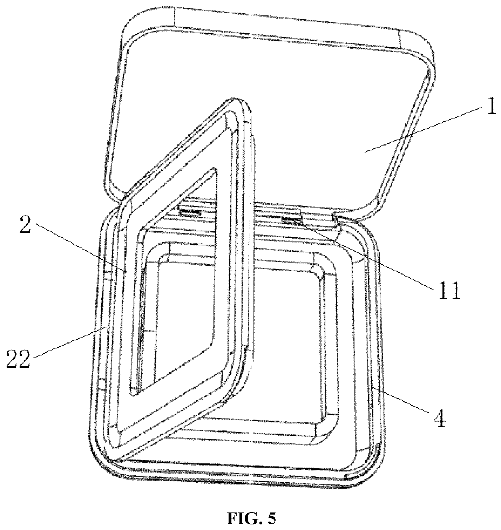

As shown in FIG. 5, in Embodiment 2, one side of the dustproof cap 1 is hinged to the base 4 through first hinge shaft 11. The first hinge shaft 11 and the second hinge shaft 22 are hinged to adjacent edges of the base 4. The first hinge shaft 11 and the second hinge shaft 22 that are separated do not interfere with each other in movement. This further meets the demand of the replaceable powder palette on replacement of the replaceable container 3.

In the present disclosure, in order to open the flip cap 2 conveniently, a corner position of a side of the flip cap 2 not provided with the second hinge shaft 22 is further provided with open groove 24. Meanwhile, in view of the demand on makeup, an inner surface of the dustproof cap 1 is further provided with cosmetic mirror 5.

## Claims

1. A replaceable powder palette, comprising a dustproof cap (1), a flip cap (2), a replaceable container (3), and a base (4), wherein the dustproof cap (1) covers the base (4); at least one use port (21) is formed in the flip cap (2); the replaceable container (3) is a top-opened case; the base (4) is provided with an accommodating cavity (41); at least one small compartment (43) is enclosed in the accommodating cavity (41) through a retaining wall (42); the replaceable container (3) is clamped on the retaining wall (42); the flip cap (2) is hinged to the base (4) and has a use position and an open position; the flip cap (2) located at the use position presses the replaceable container (3), with the use port (21) corresponding to an opening of the replaceable container (3); and when the flip cap (2) is located at the open position, the replaceable container (3) is in a dismountable state;
wherein a pair of fetching gaps (44) are formed centrosymmetrically in the retaining wall (42); there are a plurality of small compartments (43); and the plurality of small compartments (43) are arranged on the base (4) in a matrix;
**characterized in that**
two adjacent ones of the plurality of small compartments (43) are formed into one group; the retaining wall (42) is divided by the pair of fetching gaps (44) into two sections; fetching gaps (44) in the retaining walls (42) corresponding to two small compartments (43) in a same group are respectively provided at same positions; and for the two small compartments (43) in the same group, adjacent sections of the retaining walls (42) are lower than sections of the retaining walls (42) away from each other.

2. The replaceable powder palette according to claim 1, wherein the replaceable container (3) is made of a degradable material.

3. The replaceable powder palette according to claim 2, wherein the base (4) is a square case; the flip cap (2) comprises one side provided with a second hinge shaft (22), and the other side provided with a fastener (23); and a clamping groove (45) matching the fastener (23) is formed in the base (4).

4. The replaceable powder palette according to claim 3, wherein one side of the dustproof cap (1) is hinged to the base (4) through a first hinge shaft (11); and the first hinge shaft (11) and the second hinge shaft (22) are a same shaft.

5. The replaceable powder palette according to claim 3, wherein one side of the dustproof cap (1) is hinged to the base (4) through a first hinge shaft (11); and the first hinge shaft (11) and the second hinge shaft (22) are hinged to adjacent edges of the base (4).

6. The replaceable powder palette according to claim 3, wherein a corner position of a side of the flip cap (2) not provided with the second hinge shaft (22) is further provided with an open groove (24).

7. The replaceable powder palette according to claim 2, wherein an inner surface of the dustproof cap (1) is further provided with a cosmetic mirror (5).

## Patentansprüche

1. Eine austauschbare Puderpalette, bestehend aus einer staubdichten Kappe (1), einem Klappdeckel (2), einem austauschbaren Behälter (3) und einem Sockel (4), wobei die staubdichte Kappe (1) den Sockel (4) abdeckt; mindestens eine Benutzungsöffnung (21) im Klappdeckel (2) ausgebildet ist; der austauschbare Behälter (3) ein von oben zu öffnender Behälter ist; der Sockel (4) mit einem Aufnahmeraum (41) versehen ist; mindestens ein kleines Fach (43) durch eine Haltewand (42) im Aufnahmeraum (41) eingeschlossen ist; der austauschbare Behälter (3) an der Haltewand (42) befestigt ist; der Klappdeckel (2) am Sockel (4) angelenkt ist und eine Benutzungsposition und eine geöffnete Position aufweist; der Klappdeckel (2) in der Benutzungsposition den austauschbaren Behälter (3) zusammendrückt, wobei die Benutzungsöffnung (21) einer Öffnung des austauschbaren Behälters (3) entspricht; und wenn sich der Klappdeckel (2) in der geöffneten Position befindet, der austauschbare Behälter (3) demontierbar ist;
wobei in der Stützwand (42) zentralsymmetrisch ein Paar von Aufnahmeschlitzen (44) ausgebildet ist; es eine Vielzahl kleiner Fächer (43) gibt; und die Vielzahl kleiner Fächer (43) auf dem Sockel (4) in einer Matrix angeordnet ist;
**dadurch gekennzeichnet, dass**
zwei benachbarte kleine Fächern (43) eine Gruppe bilden; die Stützmauer (42) durch zwei Öffnungen (44) in zwei Abschnitte unterteilt ist; Öffnungen (44) in den Stützmauern (42), die zu zwei kleinen Fächern (43) derselben Gruppe gehören, jeweils an denselben Positionen angeordnet sind; und bei den beiden kleinen Fächern (43) derselben Gruppe benachbarte Abschnitte der Stützmauern (42) niedriger als voneinander entfernte Abschnitte sind.

2. Die austauschbare Pulverpalette nach Anspruch 1, wobei der austauschbare Behälter (3) aus einem abbaubaren Material besteht.

3. Die austauschbare Puderpalette nach Anspruch 2, wobei der Sockel (4) ein quadratisches Gehäuse ist; der Klappdeckel (2) auf einer Seite mit einem zweiten Scharnierschaft (22) und auf der anderen Seite mit einem Befestigungselement (23) versehen ist; und im Sockel (4) eine zum Befestigungselement (23) passende Klemmnut (45) ausgebildet ist.

4. Die austauschbare Puderpalette nach Anspruch 3, wobei eine Seite der staubdichten Kappe (1) über einen ersten Scharnierschaft (11) mit dem Sockel (4) verbunden ist; und der erste Scharnierschaft (11) und der zweite Scharnierschaft (22) ein gleicher Schaft sind.

5. Die austauschbare Puderpalette nach Anspruch 3, wobei eine Seite der staubdichten Kappe (1) über einen ersten Scharnierschaft (11) mit dem Sockel (4) verbunden ist; und der erste Scharnierschaft (11) und der zweite Scharnierschaft (22) an benachbarten Kanten des Sockels (4) verbunden sind.

6. Die austauschbare Puderpalette nach Anspruch 3, wobei eine Eckposition einer Seite des Klappdeckels (2), die nicht mit dem zweiten Scharnierschaft (22) versehen ist, ferner mit einer offenen Nut (24) versehen ist.

7. Die austauschbare Puderpalette nach Anspruch 2, wobei die Innenfläche der staubdichten Kappe (1) ferner mit einem Kosmetikspiegel (5) versehen ist.

## Revendications

1. Une palette de poudre remplaçable, comprenant un bouchon antipoussière (1), un capuchon basculant (2), un contenant remplaçable (3) et une base (4), dans laquelle le bouchon antipoussière (1) recouvre la base (4) ; au moins un orifice d'utilisation (21) est formé dans le capuchon basculant (2) ; le contenant remplaçable (3) est un boîtier ouvert par le dessus ; la base (4) est dotée d'une cavité d'accueil (41) ; au moins un petit compartiment (43) est enfermé dans la cavité d'accueil (41) à travers une paroi de retenue (42) ; le contenant remplaçable (3) est fixé à la paroi de retenue (42) ; le capuchon basculant (2) est articulé à la base (4) et possède une position d'utilisation et une position ouverte ; le capuchon basculant (2) situé à la position d'utilisation appuie sur le contenant remplaçable (3), l'orifice d'utilisation (21) correspondant à une ouverture du contenant remplaçable (3) ; et lorsque le capuchon basculant (2) est placé en position ouverte, le contenanr remplaçable (3) est dans un état démontable ;
dans laquelle deux espaces de récupération (44) sont formés de façon centrosymétrique dans la paroi de retenue (42) ; plusieurs petits compartiments (43) sont présents ; et lesdits plusieurs petits compartiments (43) sont disposés sur la base (4) dans une matrice ;
caractérisée en ce :
deux compartiments adjacents de la pluralité de petits compartiments (43) sont formés en un seul groupe ; la paroi de retenue (42) est divisée par les deux trous de récupération (44) en deux sections ; les espaces de récupération (44) dans les parois de retenue (42) correspondant à deux petits compartiments (43) dans un même groupe sont respectivement prévus aux mêmes endroits ; et pour les deux petits compartiments (43) du même groupe, les sections adjacentes des parois de retenue (42) sont plus basses que les sections des parois de retenue (42) séparées l'une de l'autre.

2. Palette de poudre remplaçable selon la revendication 1, dans laquelle le contenant remplaçable (3) est fabriqué dans un matériau dégradable.

3. Palette de poudre remplaçable selon la revendication 2, dans laquelle la base (4) est un boîtier carré ; le capuchon basculant (2) comprend un côté muni d'un second axe articulé (22), et l'autre côté d'une fixation (23) ; et une rainure de serrage (45) correspondant à la fixation (23) est formée dans la base (4).

4. Palette de poudre remplaçable selon la revendication 3, dans laquelle un côté du capuchon antipoussière (1) est articulé sur la base (4) via un premier axe articulé (11) ; et le premier axe articulé (11) et le second axe articulé (22) sont un même axe.

5. Palette de poudre remplaçable selon la revendication 3, dans laquelle un côté du capuchon antipoussière (1) est articulé sur la base (4) via un premier axe articulé (11) ; et le premier axe articulé (11) et le second axe articulé (22) sont articulés sur les bords adjacents de la base (4).

6. Palette de poudre remplaçable selon la revendication 3, dans laquelle une position d'angle d'un côté du capuchon basculant (2) non dotée du second axe articulé (22) est également dotée d'une rainure ouverte (24).

7. Palette de poudre remplaçable selon la revendication 2, dans laquelle une surface intérieure du bouchon antipoussière (1) est également dotée d'un miroir cosmétique (5).
